# EUROPEAN PATENT APPLICATION

(11) **EP 4 845 100 A2**
(43) Date of publication of application: **25.11.2026**
(21) Application number: 26196444.9
(22) Date of filing: 07.04.2015
(51) Int. Cl.: H04L 9/40

(54) **METHODS AND SYSTEMS FOR PROTECTING A SECURED NETWORK**

(30) Priority: 16.04.2014 US 201414253992
(62) Document number(s) of the earlier application(s) in accordance with Art. 76 EPC: 23194550.2 / 4 274 166; 21211162.9 / 4 020 883; 21169017.7 / 3 869 767; 19170936.9 / 3 550 795; 15722292.8 / 3 132 587
(71) Applicant: Centripetal Limited, Galway (IE)
(72) Inventor: ROGERS, Steven, Herndon, 20171 (US); MOORE, Sean, Herndon, 20171 (US); AHN, David K., Herndon, 20171 (US); GEREMIA, Peter P., Herndon, 20171 (US)
(74) Representative: MFG Patentanwälte Meyer-Wildhagen Meggle-Freund Gerhard PartG mbB

(57) **Abstract**

Methods and systems for protecting a secured network are presented. For example, one or more packet security gateways may be associated with a security policy management server. At each packet security gateway, a dynamic security policy may be received from the security policy management server, packets associated with a network protected by the packet security gateway may be received, and at least one of multiple packet transformation functions specified by the dynamic security policy may be performed on the packets.

## Description

### CROSS-REFERENCE TO RELATED APPLICATIONS

This application claims priority to U.S. Patent Application Serial No. 14/253,992, filed April 16, 2014, and entitled "METHODS AND SYSTEMS FOR PROTECTING A SECURED NETWORK," the disclosure of which is incorporated by reference herein in its entirety and made part hereof.

### BACKGROUND

The TCP/IP network protocols (e.g., the Transmission Control Protocol (TCP) and the Internet Protocol (IP)) were designed to build large, resilient, reliable, and robust networks. Such protocols, however, were not originally designed with security in mind. Subsequent developments have extended such protocols to provide for secure communication between peers (e.g., Internet Protocol Security (IPsec)), but the networks themselves remain vulnerable to attack (e.g., Distributed Denial of Service (DDoS) attacks).

Most existing approaches to protecting such networks are reactive rather than proactive. While reactive approaches may identify the source of an attack and assist in subsequent mitigation efforts, in most instances, the attack will have already been successfully launched.

Proactive solutions, however, have often been deemed untenable due to an inability to scale to larger networks. A significant challenge associated with building a scalable proactive solution is the need to filter substantially all network traffic at a high resolution. In a large network, where traffic volumes may be enormous, the time required to provide high resolution filtering has traditionally been thought to render a proactive solution infeasible.

### SUMMARY

The following presents a simplified summary in order to provide a basic understanding of some aspects of the disclosure. It is neither intended to identify key or critical elements of the disclosure nor to delineate the scope of the disclosure. The following summary merely presents some concepts in a simplified form as a prelude to the description below.

Aspects of this disclosure relate to protecting a secured network. In some embodiments, one or more packet security gateways are associated with a security policy management server. At each of the packet security gateways, a dynamic security policy may be received from the security policy management server, packets associated with a network protected by the packet security gateway may be received, and at least one of multiple packet transformation functions specified by the dynamic security policy may be performed on the packets. Performing the at least one of multiple packet transformation functions specified by the dynamic security policy on the packets may include performing at least one packet transformation function other than forwarding or dropping the packets.

In some embodiments, two or more of the packet security gateways may be configured in series such that packets forwarded from a first of the packet security gateways are received by a second of the packet security gateways. In some embodiments, the dynamic security policy may include two rules requiring sequential execution. A first of the packet security gateways may perform a packet transformation function specified by one of the rules on the packets and a second of the packet security gateways may subsequently perform a packet transformation function specified by the other of the rules on packets received from the first packet security gateway.

In some embodiments, the dynamic security policy may include a rule specifying a set of network addresses for which associated packets should be dropped and a rule specifying that all packets associated with network addresses outside the set should be forwarded. Additionally or alternatively, the dynamic security policy may include a rule specifying a set of network addresses for which associated packets should be forwarded and a rule specifying that all packets associated with network addresses outside the set should be dropped. In some embodiments, the security policy management server may receive information associated with one or more Voice over Internet Protocol (VoIP) sessions and the set of network addresses for which associated packets should be forwarded may be created or altered utilizing the information associated with the one or more VoIP sessions.

In some embodiments, the packet security gateways may receive three or more dynamic security policies from the security policy management server. A first of the dynamic security policies may specify a first set of network addresses for which packets should be forwarded. A second of the dynamic security policies may be received after the first and may specify a second set of network addresses, which includes more network addresses than the first set, for which packets should be forwarded. A third of the dynamic security policies may be received after the second and may specify a third set of network addresses, which includes more network addresses than the second set, for which packets should be forwarded.

In some embodiments, the dynamic security policy may include two rules that each specify a set of network addresses. The dynamic security policy may specify that packets associated with the first set of network addresses should be placed in a first forwarding queue and packets associated with the second set of network addresses should be placed in a second forwarding queue. The first forwarding queue may have a different queueing policy, for example, a higher forwarding rate, than the second forwarding queue.

In some embodiments, the dynamic security policy may include a rule specifying a set of network addresses and an additional parameter. The packet transformation function specified by the dynamic security policy may include routing packets that fall within the specified set and match the additional parameter to a network address different from a destination network address specified by the packets. In some embodiments, the additional parameter may be a Session Initiation Protocol (SIP) Uniform Resource Identifier (URI). The network address different from the destination network address may correspond to a device configured to copy information contained within the packets and forward the packets to the destination network address specified by the packets.

In some embodiments, the packet transformation function may forward the packets into the network protected by the packet security gateway. In some embodiments, the packet transformation function may forward the packets out of the network protected by the packet security gateway. In some embodiments, the packet transformation function may forward the one or more packets to an IPsec stack having an IPsec security association corresponding to the packets. In some embodiments, the packet transformation function may drop the packets.

In some embodiments, the dynamic security policy may include multiple rules. One of the rules may specify the packet transformation function. In some embodiments, one of the rules may specify a five-tuple of values selected from packet header information. The five-tuple may specify one or more protocol types, one or more IP source addresses, one or more source ports, one or more IP destination addresses, and one or more destination ports. In some embodiments, one of the rules may specify a Differentiated Service Code Point (DSCP) that maps to a DSCP field in an IP header of one of the packets.

In some embodiments, one of the packet security gateways may operate in a network layer transparent manner. For example, the packet security gateway may send and receive traffic at a link layer using an interface that is not addressed at the network layer and simultaneously perform the packet transformation function at the network layer. Additionally or alternatively, the packet security gateway may include a management interface having a network layer address. Access to the management interface may be secured at the application level.

In some embodiments, the dynamic security policy may include a rule generated based, at least in part, on a list of known network addresses associated with malicious network traffic. In some embodiments, the list of known network addresses associated with malicious network traffic may be received from a subscription service that aggregates information associated with malicious network traffic.

In some embodiments, the packets associated with the network protected by the packet security gateway may originate within the network protected by the packet security gateway and may be destined for a network distinct from the network protected by the packet security gateway. Additionally or alternatively, the packets associated with the network protected by the packet security gateway may originate within a network distinct from the network protected by the packet security gateway and may be destined for a host within the network protected by the packet security gateway.

In some embodiments, one of the packet security gateways may be located at each boundary between a protected network associated with the security policy management server and an unprotected network.

Other details and features will be described in the sections that follow.

### BRIEF DESCRIPTION OF THE DRAWINGS

The present disclosure is pointed out with particularity in the appended claims. Features of the disclosure will become more apparent upon a review of this disclosure in its entirety, including the drawing figures provided herewith.

Some features herein are illustrated by way of example, and not by way of limitation, in the figures of the accompanying drawings, in which like reference numerals refer to similar elements.
FIG. 1 illustrates an exemplary network environment in which one or more aspects of the disclosure may be implemented.
FIG. 2 illustrates an exemplary packet security gateway.
FIG. 3 illustrates an exemplary dynamic security policy.
FIG. 4 illustrates an exemplary configuration of multiple packet security gateways in series.
FIG. 5 illustrates an exemplary security policy management server.
FIG. 6 illustrates an exemplary network environment for implementing a monitoring service.
FIG. 7 illustrates an exemplary network environment that includes a secured network having multiple boundaries with unsecured networks.
FIG. 8 illustrates an exemplary network environment that includes multiple distinct secured networks.
FIG. 9 illustrates an exemplary secure LAN environment.
FIG. 10 illustrates an exemplary method for protecting a secured network.
FIG. 11 illustrates an exemplary method for protecting a secured network that includes identifying packets based on application-layer packet-header information.
FIG. 12 illustrates an exemplary method for protecting a secured network that includes performing a packet digest logging function on packets that correspond to specified packet-identification criteria.
FIG. 13 illustrates an exemplary method for protecting a secured network that includes receiving security updates from multiple sources.

### DETAILED DESCRIPTION

In the following description of various illustrative embodiments, reference is made to the accompanying drawings, which form a part hereof, and in which is shown, by way of illustration, various embodiments in which aspects of the disclosure may be practiced. It is to be understood that other embodiments may be utilized, and structural and functional modifications may be made, without departing from the scope of the present disclosure.

Various connections between elements are discussed in the following description. These connections are general and, unless specified otherwise, may be direct or indirect, wired or wireless. In this respect, the specification is not intended to be limiting.

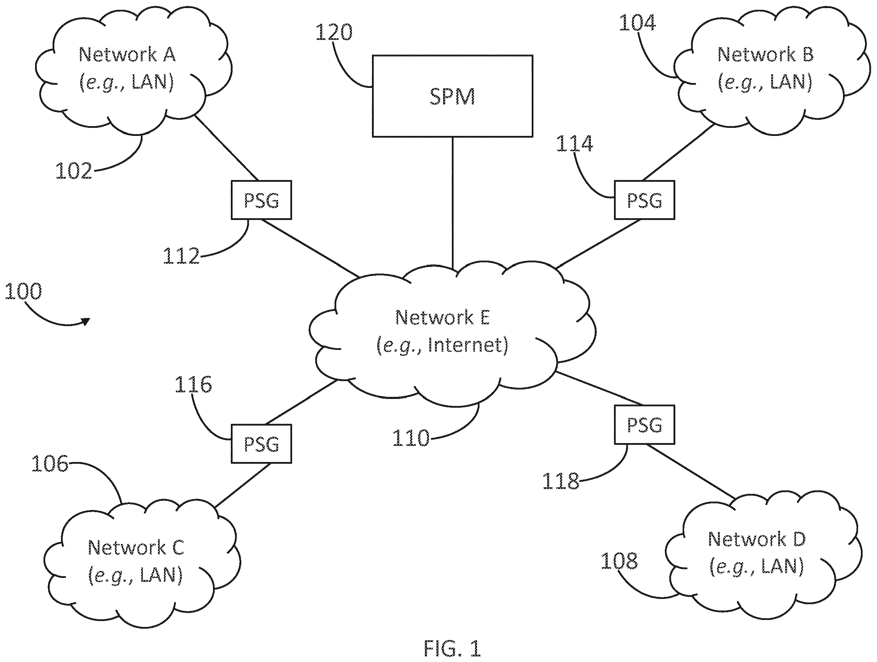

FIG. 1 illustrates an exemplary network environment in which one or more aspects of the disclosure may be implemented. Referring to FIG. 1, network environment **100** may include networks A - E **102, 104, 106, 108,** and **110.** One or more networks within network environment **100** may be a Local Area Network (LAN) or a Wide Area Network (WAN). Such a LAN or WAN may be associated, for example, with an organization (*e.g*., a company, university, enterprise, or government agency). For example, networks A - D **102, 104, 106,** and **108** may be LANs, any combination of which may be associated with one or more organizations. One or more networks within network environment **100** may interface with one or more other networks within network environment **100.** For example, network environment **100** may include a WAN that interfaces one or more LANs within network environment **100** or network environment **100** may include one or more Internet Service Providers (ISPs) that interface one or more LANs or WANs within network environment **100** via the Internet. For example, network E **110** may comprise the Internet and may interface networks A - D **102, 104, 106,** and **108.**

As used herein, a packet security gateway includes any computing device configured to receive packets and perform a packet transformation function on the packets. Optionally, a packet security gateway may further be configured to perform one or more additional functions as described herein. As used herein, a security policy management server includes any computing device configured to communicate a dynamic security policy to a packet security gateway. Optionally, a security policy management server may further be configured to perform one or more additional functions as described herein. As used herein, a dynamic security policy includes any rule, message, instruction, file, data structure, or the like that specifies criteria corresponding to one or more packets and identifies a packet transformation function to be performed on packets corresponding to the specified criteria. Optionally, a dynamic security policy may further specify one or more additional parameters as described herein.

Network environment **100** may include one or more packet security gateways and one or more security policy management servers. For example, network environment **100** may include packet security gateways **112, 114, 116,** and **118,** and security policy management server **120.** One or more security policy management servers may be associated with a protected network. For example, networks A - D **102, 104, 106,** and **108** may each be distinct LANs associated with a common organization and may each form part of a protected network associated with security policy management server **120.** Many network protocols route packets dynamically, and thus the path a given packet may take cannot be readily predicted. Accordingly it may be advantageous to locate a packet security gateway at each boundary between a protected network and an unprotected network. For example, packet security gateway **112** may be located at the boundary between network A **102** and network E **110.** Similarly, packet security gateway **114** may be located at the boundary between network B **104** and network E **110;** packet security gateway **116** may be located at the boundary between network C **106** and network E **110;** and packet security gateway **118** may be located at the boundary between network D **108** and network E **110.** As will be described in greater detail below, each of one or more packet security gateways associated with a security policy management server may be configured to receive a dynamic security policy from the security policy management server, receive packets associated with a network protected by the packet security gateway, and perform a packet transformation function specified by the dynamic security policy on the packets. For example, each of packet security gateways **112, 114, 116,** and **118** may be configured to receive a dynamic security policy from security policy management server **120.** Each of packet security gateways **112, 114, 116,** and **118** may also be configured to receive packets respectively associated with networks A - D **102, 104, 106,** and **108.** Each of packet security gateways **112, 114, 116,** and **118** may further be configured to perform a packet transformation function specified by the dynamic security policy received from security policy management server **120** on the packets respectively associated with networks A - D **102, 104, 106,** and **108.**

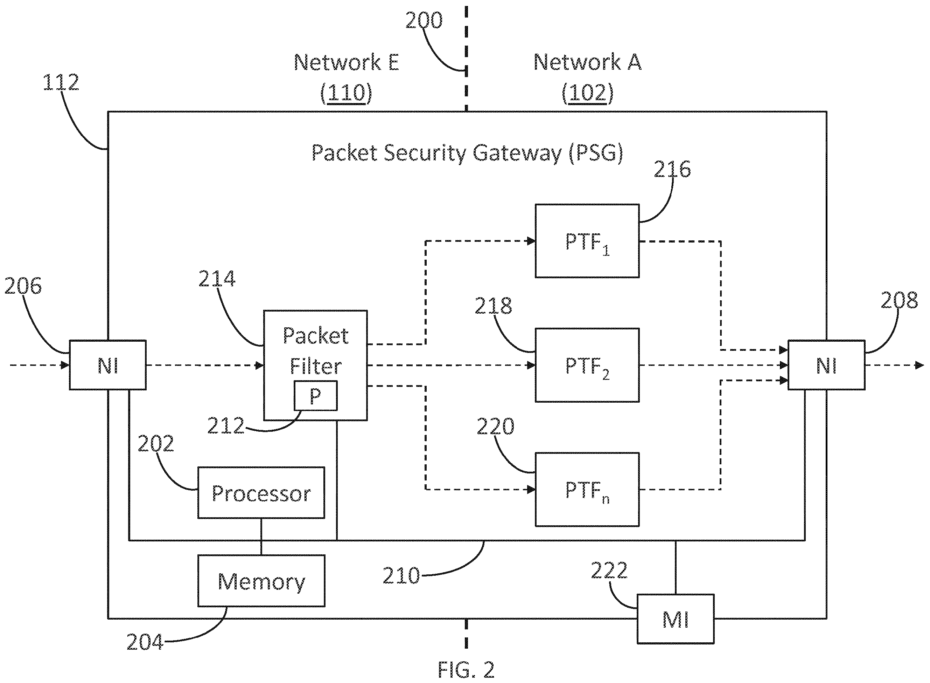

FIG. 2 illustrates an exemplary packet security gateway according to one or more aspects of the disclosure. Referring to FIG. 2, as indicated above, packet security gateway **112** may be located at network boundary **200** between network A **102** and network E **110.** Packet security gateway **112** may include processor **202,** memory **204,** network interfaces **206** and **208,** packet filter **214,** and management interface **222.** Processor **202,** memory **204,** network interfaces **206** and **208,** packet filter **214,** and management interface **222** may be interconnected via data bus **210.** Network interface **206** may connect packet security gateway **112** to network E **110.** Similarly, network interface **208** may connect packet security gateway **112** to network A **102.** Memory **204** may include one or more program modules that when executed by processor **202,** configure packet security gateway **112** to perform various functions as described herein.

Packet security gateway **112** may be configured to receive a dynamic security policy from security policy management server **120.** For example, packet security gateway **112** may receive dynamic security policy **212** from security policy management server **120** via management interface **222** (*i.e*., out-of-band signaling) or network interface **206** (*i.e*., in-band signaling). Packet security gateway **112** may include one or more packet filters or packet discriminators, or logic for implementing one or more packet filters or packet discriminators. For example, packet security gateway **112** may include packet filter **214,** which may be configured to examine information associated with packets received by packet security gateway **112** and forward the packets to one or more packet transformation functions based on the examined information. For example, packet filter **214** may examine information associated with packets received by packet security gateway **112** (*e.g*., packets received from network E **110** via management interface **222** or network interface **206**) and forward the packets to one or more of packet transformation functions 1 - N **216, 218,** and **220** based on the examined information.

As will be described in greater detail below, dynamic security policy **212** may include one or more rules and the configuration of packet filter **214** may be based on one or more of the rules included in dynamic security policy **212.** For example, dynamic security policy **212** may include one or more rules specifying that packets having specified information should be forwarded to packet transformation function **216,** while all other packets should be forwarded to packet transformation function **218.** Packet transformation functions 1 - N **216, 218,** and **220** may be configured to perform one or more functions on packets they receive from packet filter **214.** For example, packet transformation functions 1 - N **216, 218,** and **220** may be configured to forward packets received from packet filter **214** into network A **102,** forward packets received from packet filter **214** to an IPsec stack having an IPsec security association corresponding to the packets, or drop packets received from packet filter **214.** In some embodiments, one or more of packet transformation functions 1 - N **216, 218,** and **220** may be configured to drop packets by sending the packets to a local "infinite sink" (*e.g.,* the /dev/null device file in a UNIX/LINUX system).

In some embodiments, packet security gateway **112** may be configured in a network layer transparent manner. For example, packet security gateway **112** may be configured to utilize one or more of network interfaces **206** and **208** to send and receive traffic at the link layer. One or more of network interfaces **206** and **208,** however, may not be addressed at the network layer. Because packet filter **214** and packet transformation functions 1 - N **216, 218,** and **220** operate at the network layer, PSG **112** may still perform packet transformation functions at the network layer. By operating in a network layer transparent manner, packet security gateway **112** may insulate itself from network attacks (*e.g*., DDoS attacks) launched at the network layer because attack packets cannot be routed to the network interfaces **206** and **208.** In some embodiments, packet security gateway **112** may include management interface **222.** Management interface **222** may be addressed at the network level in order to provide packet security gateway **112** with network level addressability. Access to management interface **222** may be secured, for example, at the application level by using a service such as SSH, or secured at the transport level using, *e.g*., TLS, or secured at the network level by attaching it to a network with a separate address space and routing policy from network A **102** and network E **110,** or secured at the link level, *e.g*., using the IEEE 802.1X framework, etc.

The flows illustrated by Figure 2 are merely exemplary and show packets that originate within a network distinct from network A **102** and are destined for a host within network A **102** in order to simplify the illustration. Packet security gateway **112** may be configured to receive and filter packets that originate within a network other than network A **102** (*e.g*., networks B - E **104, 106, 108,** or **110**) and are destined for a host within network A **102,** as well as packets that originate within network A **102** destined for a network distinct from network A **102** (*e.g.*, network B - D **104, 106, 108,** or **110**). That is, packet security gateway **112** may be configured to filter and perform one or more packet transformation functions on packets flowing in either direction and may thus be utilized, for example, to both protect network A **102** from malicious network traffic and to prevent malicious network traffic from leaving network A **102.**

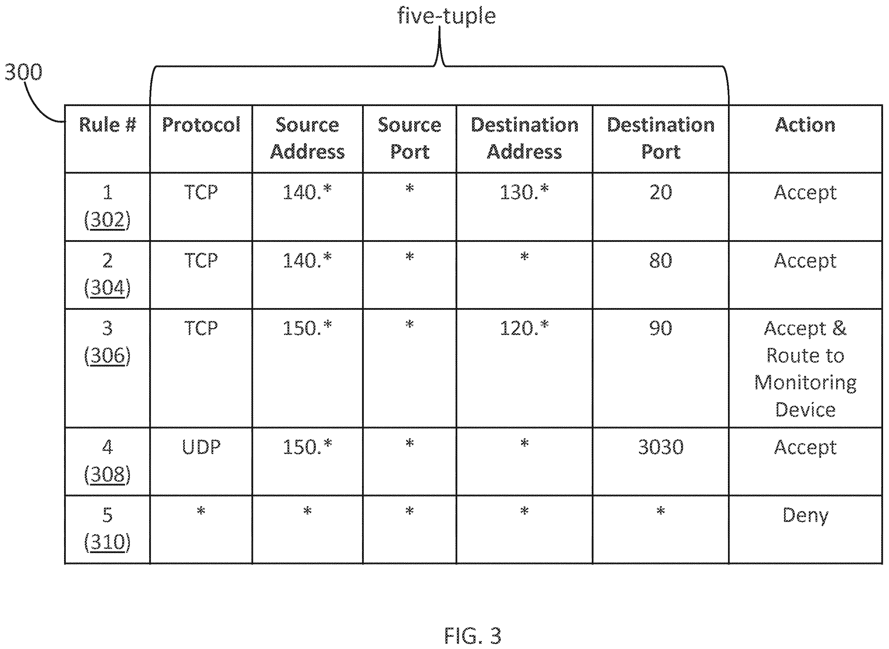

FIG. 3 illustrates an exemplary dynamic security policy in accordance with one or more embodiments. Referring to FIG. 3, dynamic security policy **300** may include rules 1 - 5 **302, 304, 306, 308,** and **310.** Each rule may specify criteria and one or more packet transformation functions that should be performed for packets associated with the specified criteria. The specified criteria may take the form of a five-tuple of values selected from packet header information, specifying a protocol type of the data section of the IP packet (*e.g.,* TCP, UDP, ICMP, or any other protocol), one or more source IP addresses, one or more source port values, one or more destination IP addresses, and one or more destination ports. For example, rule 1 **302** may specify that IP packets containing TCP packets, originating from a source IP address that begins with 140, having any source port, destined for an IP address that begins with 130, and destined for port 20 should have an accept packet transformation function (*e.g*., the identity function) performed on them. Similarly, rule 2 **304** may specify that IP packets containing TCP packets, originating from a source IP address that begins with 140, having any source port, destined for any IP address, and destined for port 80 should have an accept packet transformation function performed on them; rule 3 **306** may specify that IP packets containing TCP packets, originating from a source IP address that begins with 150, having any source port, destined for any IP address that begins with 120, and destined for port 90 should have an accept packet transformation function performed on them; rule 4 **308** may specify that IP packets containing UDP packets, originating from a source IP address that begins with 150, having any source port, destined for any IP address, and destined for port 3030 should have an accept packet transformation function performed on them; and rule 5 **310** may specify that IP packets containing any data, originating from any source IP address, having any source port, destined for any IP address, and destined for any port should have a deny packet transformation function performed on them. One or more rules included in dynamic security policy **300** may be specified in IP version 4 or IP version 6. In some embodiments, the specified criteria may comprise values selected from application-layer packet-header information. For example, application-layer hypertext transfer protocol (HTTP) packets, which transfer information between instances of web client applications (*e.g.*, web browsers) and web server applications (*e.g*., named web sites such as www.examplewebsite.com), may contain headers that specify methods and/or one or more uniform resource identifiers (URIs) for transferring resources (*e.g*., files) between client and servers. For example, the HTTP GET method may transfer URI-labeled resources (*e.g*., hypertext markup language (HTML) files) from a server to a client. Similarly, the HTTP PUT method may transfer resources from a client to a server. A rule may specify that IP packets containing HTTP packets with a GET method and transferring a resource with a particular URI should have an accept packet transformation function performed on them. Another rule may specify that IP packets containing HTTP packets with a PUT method and transferring a resource to a server with a particular URI should have a deny packet transformation function performed on them. Rules may specify criteria comprising values selected from five-tuple header information and/or values selected from application-layer header information.

As will be described in greater detail below, dynamic security policy **300** may include one or more rules that specify a packet transformation function other than forwarding (accepting or allowing) or dropping (denying) a packet. For example, rule 3 **306** may specify that IP packets containing TCP packets, originating from a source IP address that begins with 150, having any source port, destined for any IP address that begins with 120, and destined for port 90 should not only have an accept packet transformation function performed on them, but should also be routed to a monitoring device.

One or more rules within dynamic security policy **300** may be required to execute in a specific order. For example, it may be required that rule 5 **310** be executed last. Because rule 5 **310** specifies that any packet should have a deny packet transformation function performed on it, if it were executed before a rule specifying an accept packet transformation function (*e.g*., one or more of rules 1 - 4 **302, 304, 306,** or **308**), no packets matching the criteria specified by the rule specifying the accept packet transformation function would pass through a packet security gateway implementing dynamic security policy **300.** Similarly, two or more rules within dynamic security policy **300** may specify overlapping criteria and different packet transformation functions. In such cases, the order-of-application of the rules may determine which rule is applied to a packet that would match the two or more rules. Such rules may be merged together or otherwise transformed into a different set of rules without overlapping criteria, which may produce the same result as the original set of rules, when applied to any packet.

A dynamic security policy may utilize the combination of one or more rules to create policies for governing packets within a network environment or effectuating one or more services within a network environment. For example, a dynamic security policy may include one or more rules, the combination of which may effectuate a blocklist service within a network environment. A dynamic security policy that effectuates a blocklist service within a network environment may include one or more rules specifying criteria (*e.g*., a set of network addresses) for which associated packets should be blocked, dropped, or denied, and at least one rule specifying that all packets outside the specified block sets should be forwarded, accepted, or allowed. Such a dynamic security policy may be constructed by including one or more rules specifying criteria (*e.g*., a set of network addresses) for which associated packets should be dropped, and a wildcard rule, designated to be executed last, and specifying that all packets should be allowed. One or more dynamic security policies that effectuate a blocklist service may be utilized to implement one or more Virtual Private Networks (VPNs).

A dynamic security policy may also include one or more rules, the combination of which may effectuate an allowlist service within a network environment. A dynamic security policy that effectuates an allowlist service within a network environment may include one or more rules specifying criteria (*e.g*., a set of network addresses) for which associated packets should be forwarded, allowed, or accepted, and at least one rule specifying that all packets outside the specified allow sets should be blocked, denied, or dropped. Such a dynamic security policy may be constructed by including one or more rules specifying criteria (*e.g*., a set of network addresses) for which associated packets should be forwarded, and a wildcard rule, designated to be executed last, and specifying that all packets should be blocked. For example, dynamic security policy **300** includes rules 1 - 4 **302, 304, 306,** and **308,** each of which specifies a set of network addresses for which packets should be allowed, and rule 5 **310** which specifies that all packets should be dropped. Thus, if rules 1 - 5 **302, 304, 306, 308,** and **310** are executed in order, dynamic security policy **300** will effectuate an allowlist service.

A dynamic security policy may also include one or more rules, the combination of which may effectuate a VoIP firewall service within a network environment. As will be discussed in greater detail below, a security policy management server may receive information associated with VoIP sessions. For example, a security policy management server may receive information associated with VoIP sessions from one or more softswitches (*e.g*., H.323 softswitches, SIP IP Multimedia Subsystem (IMS) softswitches) or session border controllers when a VoIP session is initialized or set up. In order to allow packets associated with such a VoIP session within a network protected by one or more packet security gateways associated with the security policy management server, the security policy management server may utilize the received information associated with the VoIP sessions to construct one or more rules for allowing the packets associated with the VoIP session. When the VoIP session is terminated or torn down, the softswitch or session border controller may notify the security policy management server, which may create or alter one or more rules to reflect the termination of the VoIP session (*e.g*., to deny future packets which may match criteria previously associated with the VoIP session).

A dynamic security policy may also include one or more rules or rule sets, the combination of which may effectuate a phased restoration service within a network environment. Such a phased restoration service may be used in the event of a network attack (*e.g*., a DDoS attack). When an attack occurs a network may be overwhelmed with network traffic and be unable to route all or any of the traffic. In the event of such an attack, it may be beneficial to utilize a dynamic security policy which effectuates a phased restoration service. Such a dynamic security policy may include one or more rules or rule sets configured for execution in time-shifted phases. Each of the rules or rule sets may specify progressively larger sets of network addresses. For example, a dynamic security policy may include three rules or rule sets which may be configured for execution in time-shifted phases. A first of the rules or rule sets may specify a relatively small set of network addresses for which packets should be forwarded (*e.g*., network addresses corresponding to mission critical network devices). A second of the rules or rule sets may specify a relatively larger set of network addresses for which packets should be forwarded (*e.g*., network addresses corresponding to trusted network devices). A third of the rules or rule sets may specify an even larger set of network addresses for which packets should be forwarded (*e.g*., network addresses corresponding to all network devices that would be allowed under ordinary circumstances). The dynamic security policy may specify that the rules or rule sets should be implemented in time-shifted phases. That is, the dynamic security policy may specify that the first rule or rule set should be executed first, and that the second rule or rule set should be executed at a time after the time at which the first rule or rule set is executed, and the third rule or rule set should be executed at a time after the time at which the second rule or rule set is executed. Such a dynamic security policy may assist a network in recovering from an attack, by allowing the network to isolate itself from the attack or recover in a controlled manner.

A dynamic security policy may also include one or more rules, the combination of which may effectuate an enqueueing service within a network environment. A dynamic security policy that effectuates an enqueueing service may include one or more rules that specify sets of network addresses and packet transformation functions that queue packets in one or more queues corresponding to the sets. These queues may then be serviced at varying rates. For example, a dynamic security policy may include two rules, each of which specify a set of network addresses. A first of the rules may specify that packets corresponding to its specified set should be queued in a first forwarding queue. A second of the rules may specify that packets corresponding to its specified set should be queued in a second forwarding queue. The first forwarding queue may be serviced at a higher forwarding rate than the second forwarding queue. Such an enqueueing service may be utilized during or following a network attack, or generally to provide prioritized service to critical network devices (*e.g*., when network resources are strained). In some embodiments, one or more rules contained within a dynamic security policy may include an arbitrary selector which may correspond to one or more parameters or fields associated with a packet. For example, a dynamic security policy rule may include a Differentiated Service Code Point (DSCP) selector that corresponds to a DSCP field in an IP header. Thus, two packets having different values within the specified DSCP field may correspond to two distinct rules within a dynamic security policy and have different packet transformation functions performed on them. For example, two otherwise identical packets having different values within the specified DSCP field may be queued in two different forwarding queues that have different forwarding rates, and may thus receive differentiated service.

A dynamic security policy may also include one or more rules, the combination of which may effectuate a multi-dimensional routing service or a multi-dimensional switching service within a network environment. For example, in some embodiments, a dynamic security policy may include one or more rules that specify a set of network addresses and an additional parameter. Such rules may further specify a packet transformation function configured to route packets within the specified set of network addresses that match the additional parameter to a network address distinct from the packets' respective destination network addresses. For example, the packet transformation function may be configured to encapsulate such packets (*e.g*., as described by Internet Engineering Task Force (IETF) Request For Comment (RFC) 2003) with an IP header specifying a network address different from their respective destination addresses. The packets may then be routed to the network address specified by the encapsulating IP header, which may correspond to a network device configured to utilize such packets or data contained within them, strip the IP header from the packets, and forward the packets to their respective destination addresses. In some embodiments, the packet transformation function may be configured to alter or modify the destination address of the packets, which may then be routed to the altered or modified destination address. Additionally or alternatively, the packet transformation function may be configured to assign such packets to a particular Layer-2 VLAN (*e.g.*, as described by IEEE 802.1Q). The packets may then be switched to another device on the same VLAN, which may or may not be on the IP-layer path that the packet would have taken if it were routed according to the packet's destination IP address instead of being switched through the VLAN.

As will be described in greater detail below, in some embodiments a dynamic security policy may include one or more rules, the combination of which may effectuate an implementation of a multi-dimensional routing service for performing a monitoring service within a network environment. For example, a dynamic security policy may include one or more rules that specify a set of network addresses (*e.g*., a set of network addresses from which a call that is to be monitored is expected to originate within) and an additional parameter (*e.g.*, a SIP URI corresponding to a caller to be monitored). As indicated above, such rules may further specify a packet transformation function configured to route or switch packets within the specified set of network addresses that match the additional parameter (*e.g*., the SIP URI) to a network address corresponding to a monitoring device. The network address corresponding to the monitoring device may be different from the packets' destination network address (*e.g*., an address corresponding to the called party or a softswitch associated with the called party). For example, the packet transformation function may be configured to encapsulate the packets with an IP header specifying the network address corresponding to the monitoring device. The packets may then be routed (or rerouted) to the monitoring device, which may be configured to copy the packets or data contained within them (*e.g.*, for subsequent review by a law enforcement or national security authority), strip the IP header from them, and then forward the packets to their destination address (*e.g*., the address corresponding to the called party or softswitch associated with the called party).

In some embodiments, a dynamic security policy may include one or more rules, the combination of which may effectuate an implementation of an informational service for performing a network communications awareness service, a network security awareness service, and/or a network threat awareness service (*e.g*., for a particular network environment). For example, a dynamic security policy may include one or more rules that specify criteria such as one or more network addresses, protocol types, method types, and/or directions (*e.g*., inbound, outbound, or the like) that are indicative of packet communications that are of interest to an organization that operates the secured network. Such rules may further specify a packet transformation function that, when applied to a packet that matches such a rule, produces a digest version, or log, of the packet. This packet log (or digest) may contain selected packet information and/or system information (*e.g*., associated network addresses, ports, protocol types, URIs, arrival times, packet sizes, directions, interface names, media access control (MAC) addresses, matching rule IDs, metadata associated with matching rules, enforced policy names, or the like). The associated packet security gateway may store and/or forward packet logs using a logging system based on a standard (*e.g*., syslog, or the like). Awareness application servers may read packet logs and perform various transformations on the logs to produce awareness information, which may be accessed by client applications.

As indicated above, a significant challenge associated with building a scalable proactive solution for protecting a secured network, is the need to filter substantially all network traffic at a high resolution. Filtering traffic at a high resolution often requires the use of many rules. In a large network, where traffic volumes may be enormous, the time required to provide high resolution filtering (*e.g*., the time required to apply a large number of rules to a large volume of traffic) has traditionally been thought to render proactive network protection solutions infeasible. This concern may be particularly acute in network environments that utilize low-latency applications (*e.g*., VoIP).

Recent advances in packet filtering technology have reduced the time required to apply large rule sets to network traffic. For example, U.S. Patent Application Publication Nos. 2006/0195896 and 2006/0248580 to Fulp et al., and U.S. Patent Application Publication No. 2011/0055916 to Ahn, describe advanced packet filtering technologies, and are each incorporated by reference herein in their entireties.

One approach to providing high resolution filtering, while reducing the number of rules applied to network traffic, may be utilized when a dynamic security policy is combinatorially complete. For example, a dynamic security policy may be configured to allow bi-directional communication between a set of N internal hosts {I₁, I₂, ..., I_{N}} within a protected network and a set of M external hosts {E₁, E₂, ..., E_{M}} outside the protected network. To enable communications between the internal hosts and the external hosts, the dynamic security policy may be constructed to include a set of rules containing each possible combination of internal hosts and external hosts (*e.g*.,{{I₁, E₁}, {I₁, E₂}, ... {I₁, E_{M}}, {I₂, E₁}, {I₂, E₂}, . . .{I₂, E_{M}}, . . .,{I_{N}, E₁}, {I_{N}, E₂}, ...{I_{N}, E_{M}}}), each of the rules being associated with an allow packet transformation function. Such a dynamic security policy would have N*M rules for allowing communication between the internal hosts and the external hosts that originate from one of the internal hosts and are destined for one of the external hosts, and an additional N*M rules for allowing communications between the internal hosts and the external hosts that originate from one of the external hosts and are destined for one of the internal hosts. An equivalent result may be achieved, however, by constructing two smaller dynamic security policies: a first dynamic security policy that includes rules specifying the N internal hosts (e.g., {{I₁}, {I₂}, ..., {I_{N}}}), each rule being associated with an accept packet transformation function; and a second dynamic security policy that includes rules specifying the M external hosts (*e.g*., {{E₁}, {E₂},..., {E_{M}}}), each rule being associated with an accept packet transformation function. Such a construct of dynamic security policies may be implemented using a system of packet security gateways configured in series.

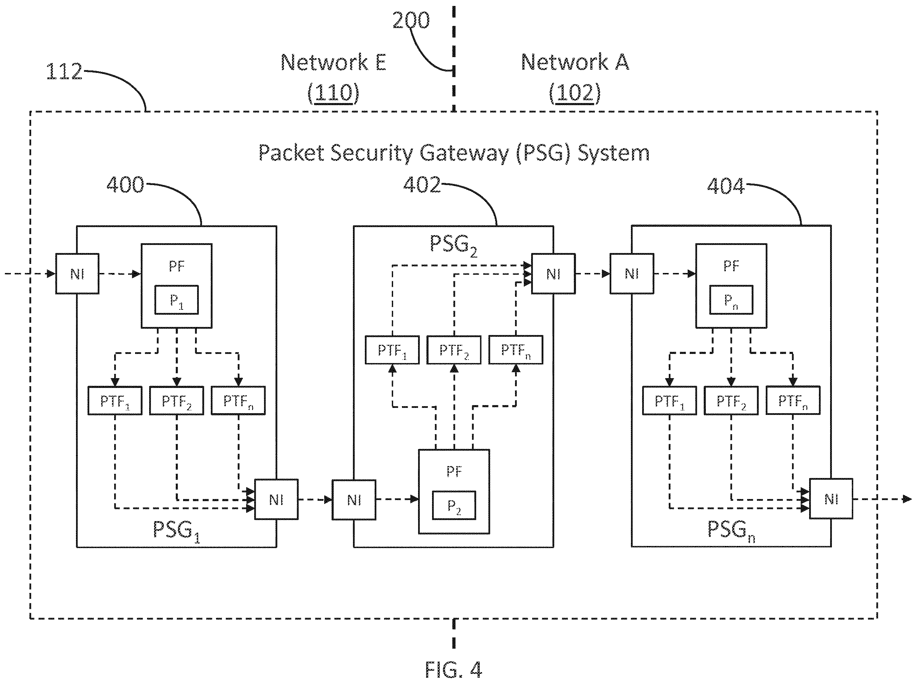

FIG. 4 illustrates an exemplary configuration of multiple packet security gateways connected in series. Referring to FIG. 4, packet security gateway **112** may include one or more packet security gateways configured in series. For example, packet security gateway **112** may include packet security gateways 1 - N **400, 402,** and **404.** Packet security gateways 1 - N **400, 402,** and **404** may be configured so that packets forwarded by packet security gateway 1 **400** are received by packet security gateway 2 **402,** and packets forwarded by packet security gateway 2 **402** are received by the next packet security gateway in the series, all the way through packet security gateway N **404.** Each of packet security gateways 1 - N **400, 402,** and **404** may include a packet filter, similar to packet filter **214** described above with respect to FIG. 2, and one or more packet transformation functions, similar to packet transformation functions 1 - N **216, 218,** and **220** described above with respect to FIG. 2. Packet security gateways 1 - N **400, 402,** and **404** may be utilized to implement a construct of dynamic security policies similar to that described above.

For example, packet security gateway 1 **400** may be configured to implement P₁, which may include rules specifying M external hosts (*e.g*., {{E₁}, {E₂}, ..., {E_{M}}}), each rule being associated with an accept packet transformation function. Packet security gateway 2 **402** may be configured to implement P₂, which may include rules specifying N internal hosts (*e.g.*, {{I₁}, {I₂},..., {I_{N}}}), each rule being associated with an accept packet transformation function. A packet received by packet security gateway **112** may be initially received via packet security gateway 1 **400**'s network interface. Packet security gateway 1 **400** may apply one or more of the rules in P₁ to the received packet until the packet matches criteria specified by a rule in P₁, at which point packet security gateway 1 **400** may perform a packet transformation function specified by the rule on the packet. For example, a packet may be received by packet security gateway **112** that originates from external host E₅ (*e.g*., a host within network E **110**) and is destined for internal host I₇ (*e.g*., a host within network A **102**). Packet security gateway 1 **400** may apply one or more of the rules in P₁ (*e.g*., {{E₁}, {E₂}, ..., {E_{M}}}) to the received packet and the received packet may match the criteria specified by one of the rules in P₁ (*e.g*., {{E₅}). The rule may specify that an accept packet transformation function should be performed, and packet security gateway 1 **400** may utilize one or more of its packet transformation functions to perform the accept packet transformation function on the packet and forward the packet to packet security gateway 2 **402.** Packet security gateway 2 **402** may apply one or more of the rules in P₂ (*e.g*., {{I₁}, {I₂}, ..., {I_{N}}}) to the packet and the packet may match the criteria specified by one of the rules in P₂ (*e.g*., {{I₇}). The rule may specify that an accept packet transformation function should be performed, and packet security gateway 2 **402** may utilize one or more of its packet transformation functions to perform the accept packet transformation function on the packet and forward the packet to network A **102.**

It will be appreciated that utilizing multiple packet security gateways in series to implement dynamic security policy constructs may increase performance and decrease memory resource requirements. For example, in the described scenario packet security gateway 1 **400** may have only been required to compare the packet to five rules and packet security gateway 2 **402** may have only been required to compare the packet to seven rules. In a worst case scenario, packet security gateway **1 400** may have only been required to compare the packet to M rules and packet security gateway 2 **402** may have only been required to compare the packet to N rules. Moreover, the series configuration may enable packet security gateway 1 **400** to begin implementing P₁ with respect to a subsequently received packet, while packet security gateway 2 **402** simultaneously implements P₂ with respect to the packet forwarded by packet security gateway 1 **400.** Furthermore, the memory requirements for this scenario with packet security gateways in series may be comparable to M+N, whereas originally the combinatorially complete set of rules contained in a single packet security gateway may have required memory comparable to N*M.

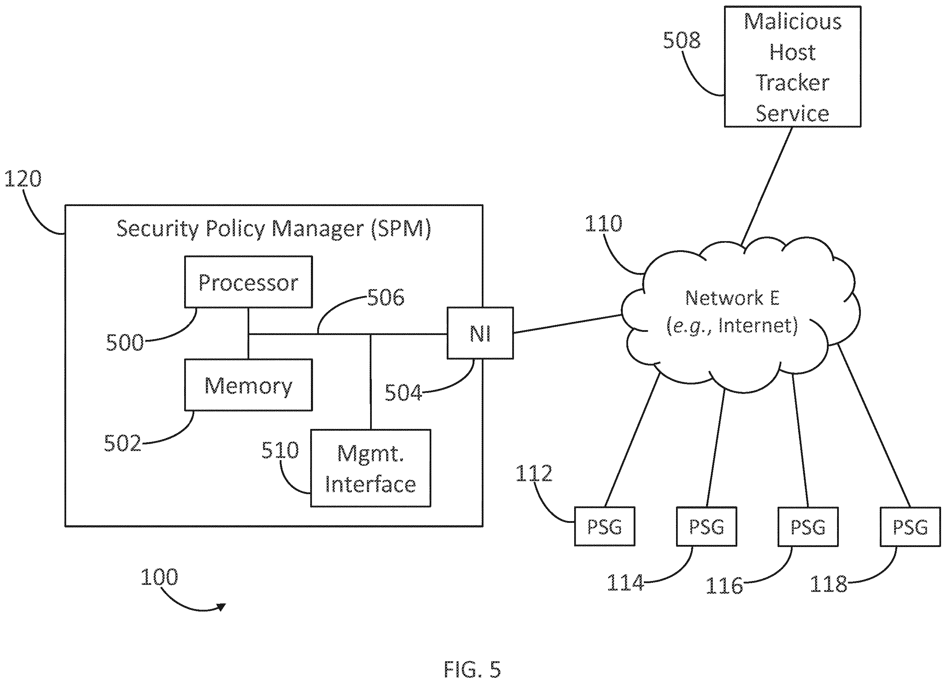

FIG. 5 illustrates an exemplary security policy management server. Referring to FIG. 5, security policy management server **120** may include processor **500,** memory **502,** and network interface **504.** One or more of processor **500,** memory **502,** and network interface **504** may be interconnected via data bus **506.** Network interface **504** may interface security policy management server **120** with network E **110.** Memory **502** may include one or more program modules that when executed by processor **500,** configure security policy management server **120** to perform functions described herein. It will be appreciated that as used herein the term "server" designates one or more computing devices configured to perform one or more functions described herein. The term "server" should not be construed to imply that a client/server relationship (*e.g.*, a relationship in which a request is received from a client and then serviced by a server) necessarily exists.

Security policy management server **120** may be configured to communicate one or more dynamic security policies to one or more packet security gateways within network environment **100.** For example, security policy management server **120** may communicate one or more dynamic security policies stored in memory **502** to one or more of packet security gateways **112, 114, 116,** and **118.** For example, security policy management server **120** may be configured to communicate one or more dynamic security policies to one or more of packet security gateways **112, 114, 116,** and **118** on a periodic basis, under specified network conditions, whenever security policy management server **120** receives a new dynamic security policy, whenever a dynamic security policy stored on security policy management server **120** is changed or altered, or in response to a request from one or more of packet security gateways **112, 114, 116,** and **118.**

Security policy management server **120** may also be configured to provide one or more administrators associated with security policy management server **120** with management interface **510.** For example, security policy management server **120** may be configured to provide one or more administrators with a Graphical User Interface (GUI) or Command Line Interface (CLI). An administrator of security policy management server **120** may utilize security policy management server **120**'s management interface **510** to configure security policy management server **120.** For example, an administrator may configure security policy management server **120** in order to associate security policy management server **120** with one or more of packet security gateways **112, 114, 116,** and **118.** An administrator of security policy management server **120** may also utilize security policy management server **120**'s management interface **510** to construct one or more dynamic security policies or to load one or more dynamic security policies into security policy management server **120**'s memory **502.** For example, an administrator associated with security policy management server **120** may manually construct one or more dynamic security policies offline and then utilize security policy management server **120**'s management interface **510** to load such dynamic security policies into security policy management server **120**'s memory **502.**

In some embodiments, security policy management server **120** may be configured to add, remove, or alter one or more dynamic security policies stored in memory **502** based on information received from one or more devices within network environment **100.** For example, security policy management server **120**'s memory **502** may include a dynamic security policy having one or more rules that specify a list of network addresses known to be associated with malicious network traffic. Security policy management server **120** may be configured to automatically create or alter one or more of such rules as new network addresses associated with malicious network traffic are determined. For example, security policy management server **120** may receive updates (*e.g*. as part of a subscription) from malicious host tracker service **508.** Malicious host tracker service **508** may aggregate information associated with malicious network traffic and updates received from malicious host tracker service **508** may include one or more network addresses that have been determined to be associated with malicious network traffic. Security policy management server **120** may be configured to create or alter one or more rules included within a dynamic security policy associated with malicious host tracker service **508** to block traffic associated with the network addresses received from malicious host tracker service **508.** Additionally or alternatively, as indicated above, security policy management server **120** may be configured to create or alter one or more dynamic security policies, or one or more rules included in one or more dynamic security policies, to account for VoIP sessions being initiated or terminated by a network device within network environment **100.**

In some embodiments, security policy management server **120** may be configured to add, remove, and/or alter one or more dynamic security policies stored in memory **502** based on information received from two or more devices within network environment **100.** For example, security policy management server **120** may receive updates (*e.g.*, as part of a subscription) from malicious host tracker service **508** and/or one or more other services. The updates from the two or more services may be correlated (*e.g*., by security policy management server **120**). For example, a network address received from host tracker service **508** may be a duplicate of a network address received from another (*e.g*., different) service (*e.g*., a range of network addresses received from host tracker service **508** may overlap with a range of network addresses received from another service). Security policy management server **120** may combine the rules associated with these correlated updates from two or more services within one or more dynamic security policies. Security policy management server **120** may be configured to reduce the size of and/or to de-correlate dynamic security policies (*e.g*., because the performance of a packet security gateway may be dependent on the size of and/or correlations within dynamic security policies). For example, duplicate network addresses may be removed, and/or overlapping ranges of network addresses may be combined into one or more new network address ranges.

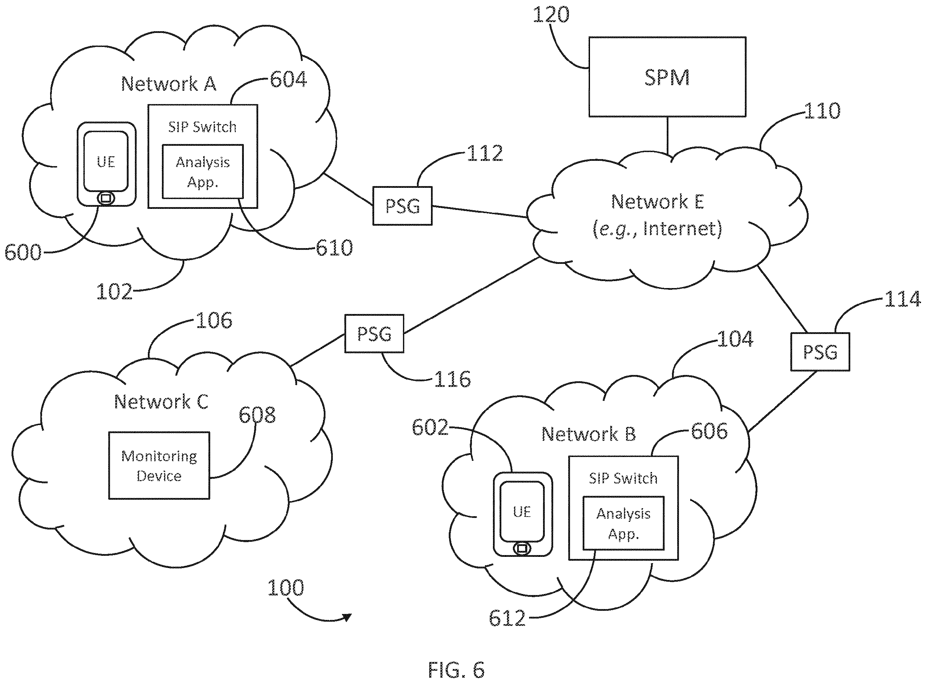

As indicated above, a dynamic security policy may include one or more rules, the combination of which may effectuate an implementation of a multi-dimensional routing service for performing a monitoring service within a network environment. FIG. 6 illustrates an exemplary network environment for implementing a monitoring service in accordance with one or more embodiments. Referring to FIG. 6, a user of network environment **100** (*e.g.,* a law enforcement or national security authority) may desire to obtain a copy of packets associated with one or more VoIP sessions (*e.g*., sessions associated with SIP URI exampleuser@exampledomain.com) within network environment **100.** Because many SIP-signaled services are designed to address sessions dynamically, it may not be possible to determine, prior to a session being set up, a particular network address and port from which packets should be copied. Moreover, due to privacy concerns, regulators may require that only packets associated with the specified VoIP sessions (*e.g*., sessions associated with SIP URI exampleuser@exampledomain.com) be copied.

For example, a user associated with SIP URI exampleuser@exampledomain.com may utilize User Equipment (UE) **600** within network A **102** to place a VoIP call to a user utilizing UE **602** within network B **104.** SIP switch **604** may be utilized by an operator of network A **102** for switching SIP signals within network A **102.** Similarly, SIP switch **606** may be utilized by an operator of network B **104** for switching SIP signals within network B **104.** One or more of SIP switches **604** and **606** may include an analysis application configured to monitor SIP signals and publish SIP messages associated with specified users to one or more subscribers. For example, the operator of network A **102** may have installed analysis application **610** on SIP switch **604** (*e.g*., accessed via a SIP IMS Service Control (ISC) interface associated with SIP switch **604**) and configured analysis application **610** to search for and publish SIP messages associated with SIP URI exampleuser@exampledomain.com to security policy management server **120.** Similarly, the operator of network B **104** may have installed analysis application **612** on SIP switch **606** and configured analysis application **612** to publish SIP messages associated with SIP URI exampleuser@exampledomain.com to security policy management server **120.**

When the user associated with SIP URI exampleuser@exampledomain.com utilizes UE **600** to place a VoIP call to the user utilizing UE **602,** analysis application **610** may detect one or more SIP signaling messages associated with the call (*e.g*., SIP signaling messages for setting up the call) and publish the messages to security policy management server 120. Security policy management server **120** may extract one or more network addresses and port numbers from the SIP signaling messages (*e.g*., a network address and port number utilized by UE **600** for placing the VoIP call to UE 602). Security policy management server **120** may utilize the extracted network addresses and port numbers to create a new dynamic security policy or alter one or more rules within an existing dynamic security policy. For example, security policy management server **120** may construct a new dynamic security policy that includes a rule specifying one of the extracted network addresses and port numbers, as well as a packet transformation function configured to route associated packets to monitoring device **608.** Security policy management server **120** may communicate the new or modified dynamic security policy to packet security gateway **112.**

When packets associated with the VoIP call between UE **600** and UE **602** are received by packet security gateway **112,** packet filter **214** may identify the packets as matching the criteria specified by the dynamic security policy received from security policy management server **120** (*e.g*., packets addressed to or from the extracted address and port number) and may perform the packet transformation function configured to route the packets to monitoring device **608.** For example, the packet transformation function configured to route the packets to monitoring device **608** may be packet transformation function 2 **218.** When packet transformation function 2 **218** receives the packets from packet filter **214,** it may encapsulate them with an IP header having an address corresponding to monitoring device **608** and may then forward them to network E **110.** Once forwarded, the packets may be routed based on the address specified by the encapsulating header, and may thus be communicated to monitoring device **608.** When the packets are received by monitoring device **608,** monitoring device **608** may copy the packets or data contained within them, and strip the encapsulating header from them. Monitoring device **608** may then forward the packets, without the encapsulating header, to network E **110.** Network E **110** may receive the packets forwarded by monitoring device **608** and may route them based on their destination address (*e.g*., to UE **602**).

In some embodiments, packet security gateway **112** may be configured to perform multiple packet transformation functions on the packets associated with the VoIP call between UEs **600** and **602.** For example, packet filter **214** may identify the packets as matching the criteria specified by the dynamic security policy received from security policy management server **120** and may forward the packets to packet transformation functions **1 216** and 2 **218.** Packet transformation function 1 **216** may be configured to forward the packets to their destination address (*e.g*., to UE **602**) and packet transformation function 2 **218** may be configured to encapsulate the packets (or a copy of the packets) with an IP header having an address corresponding to monitoring device **608** and then forward the encapsulated packets to network E **110.** Once forwarded, the encapsulated packets may be routed based on the address specified by the encapsulating header, and may thus be communicated to monitoring device **608,** which may store the packets or data contained within them for subsequent review or analysis (*e.g*., by a law enforcement or national security authority). In such embodiments, it may not be necessary for monitoring device **608** to strip the encapsulating header from the packets or route them based on their destination address (*e.g*., to UE **602**) because packet transformation function 1 **216** may have already forwarded the packets to their destination address (*e.g*., to UE **602**).

It will be appreciated that SIP switch **604**'s analysis application **610** may similarly detect SIP signaling associated with the termination of the VoIP call between UE **600** and UE **602** and may publish the SIP messages to security policy management server **120.** Security policy management server **120** may utilize one or more network addresses and port numbers within the messages to construct a new dynamic security policy or modify one or more rules within an existing dynamic security policy and communicate the new or modified dynamic security policy to packet security gateway **112** in order to ensure that future packets associated with the network address and port number but not associated with SIP URI exampleuser@exampledomain.com are not routed to monitoring device **608.** Security policy management server **120** may communicate any dynamic security policy constructed or modified based on SIP messages to any of multiple packet security gateways (*e.g*., packet security gateways **114** and **116**) within network environment **100** in order to ensure that all packets associated with the VoIP call between UE **600** and UE **602** are forwarded to monitoring device **608.**

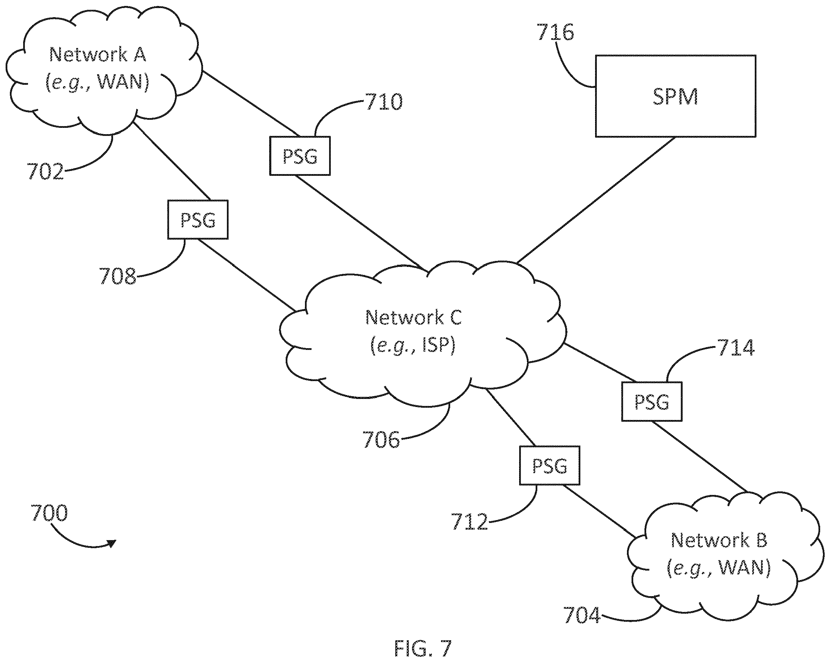

FIG. 7 illustrates an exemplary network environment that includes a secured network having multiple boundaries with unsecured networks in which one or more embodiments may be implemented. Network environment **700** may include networks A - C **702, 704,** and **706.** Networks A **702** and B **704** may be a LAN or WAN associated with an organization (*e.g*., a company, university, enterprise, or government agency). One or more networks within network environment **700** may interface with one or more other networks within network environment **700.** For example, the organizations associated with networks A **702** and B **704** may subscribe to an ISP to provide interconnectivity between their respective networks or allow public access to their respective networks (*e.g*., via the Internet). Each of networks A **702** and B **704** may be connected to network C **706,** which may be the ISP's network. The ISP may desire to offer an interconnection service between networks A **702** and B **704,** but may also want to enforce one or more dynamic security policies with respect to traffic traversing network C **706**. Accordingly, one or more packet security gateways may be located at each boundary between network A **702** and network C **706,** and each boundary between network B **704** and network C **706.** For example, packet security gateway **708** and packet security gateway **710** may be respectively located at first and second boundaries between networks A **702** and C **706.** Similarly, packet security gateways **712** and **714** may be respectively located at first and second boundaries between networks B **704** and C **706.** Each of packet security gateways **708, 710, 712,** and **714** may be associated with security policy management server **716.**

Security policy management server **716** may maintain one or more dynamic security policies configured for protecting network C **706,** and may be managed by the ISP associated with network C **706.** Security policy management server **716** may ensure that each of packet security gateways **708, 710, 712,** and **714** protect each of their respective boundaries with network C **706** in a uniform manner. For example, security policy management server **716** may be configured to communicate one or more dynamic security policies it maintains to each of packet security gateways **708, 710, 712,** and **714** on a periodic basis, in response to being directed to by a network operator associated with network environment **700,** in response to detected network conditions (*e.g*., an attack or high resource utilization), or in response to a request from one or more of packet security gateways **708, 710, 712,** or **714.**

In some embodiments, security policy management server **716** may be configured to communicate different dynamic security policies to one or more of packet security gateways **708, 710, 712,** and **714** based on, for example, their respective locations within network environment **700.** For example, security policy management server **716** may be configured to implement one or more anti-spoofing techniques (*e.g*., ingress filtering or Best Current Practice (BCP) 38, as described by Internet Engineering Task Force (IETF) Request For Comment (RFC) 2827) with respect to network environment **700.** Effective implementation of such techniques may require that a dynamic security policy be based on the location at which it is being implemented. For example, a dynamic security policy that implements ingress filtering may comprise one or more rules that filter based on a packet's source address, identifying packets having source addresses that could not possibly have originated from a network downstream of the ingress filtering point (*e.g*., packets having spoofed source addresses). Such rules may vary depending on the boundary point for which they are implemented (*e.g.*, a packet for one boundary may be properly identified as spoofed, yet a packet having the same source address may be legitimate traffic at a different boundary point). Accordingly, security policy management server **716** may be configured to communicate different dynamic security policies to one or more of packet security gateways **708, 710, 712,** and **714** based on their respective locations within network environment **700.** For example, security policy management server **716** may communicate a dynamic security policy to packet security gateways **708** and **710** that includes one or more rules for performing ingress filtering for network A **702** (*e.g*., for identifying packets having source addresses that could not have originated within network A **702**) and a different dynamic security policy to packet security gateways **712** and **714** that includes one or more rules for performing ingress filtering for network B **704** (*e.g*., for identifying packets having source addresses that could not have originated within network B **704**)**.**

It will be appreciated that by maintaining uniform dynamic security policies at each boundary between networks A **702** and C **706,** as well as at each boundary between networks B **704** and C **706,** security policy management server **716** and packet security gateways **708, 710, 712,** and **714** may aid the ISP associated with network C **706** in protecting network C **706** from network attacks.

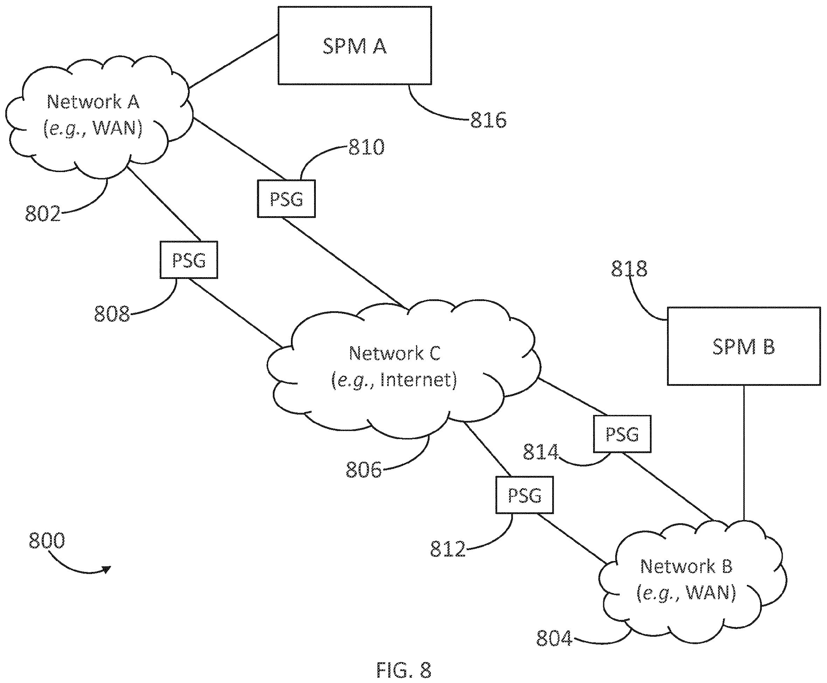

FIG. 8 illustrates an exemplary network environment that includes multiple distinct secured networks in which one or more embodiments may be implemented. Referring to FIG. 8, network environment **800** may include networks A **802, B 804,** and C **806.** Each of networks A **802** and B **804** may interface with network C **806** at multiple boundaries within network environment **800.** Packet security gateways **808** and **810** may be respectively located at first and second boundaries between networks A **802** and C **806.** Similarly, packet security gateways **812** and **814** may be respectively located at first and second boundaries between networks B **804** and C **806.**

Network A **802** and B **804** may both be associated with a common organization (*e.g*., a company, university, enterprise, or government agency), or may each be associated with a distinct organization. In the former case, the common organization may desire to utilize one or more dynamic security policies with respect to network A **802** and one or more different dynamic security policies with respect to network B **804.** In the latter case, an organization associated with network A **802** may desire to utilize one or more dynamic security policies with respect to network A **802** and a different organization associated with network B **804** may desire to utilize one or more different dynamic security policies with respect to network B **804.** Network environment **800** may include security policy management servers A **816** and B **818.** Security policy management server A **816** may be associated with network A **802** and may maintain one or more dynamic security policies configured for protecting network A **802.** Similarly, security policy management server B **818** may be associated with network B **804** and may maintain one or more dynamic security policies configured for protecting network B **804.**

Packet security gateways **808** and **810** may be associated with security policy management server A **816.** Similarly, packet security gateways **812** and **814** may be associated with security policy management server B **818.** Security policy management server A **816** may ensure that packet security gateways **808** and **810** protect each of their respective boundaries with network C **806** in a uniform manner. For example, security policy management server A **816** may be configured to communicate one or more dynamic security policies it maintains to packet security gateways **808** and **810** on a periodic basis, in response to being directed to by a network operator associated with network A **802,** in response to detected network conditions (*e.g*., an attack or high resource utilization), or in response to a request from packet security gateway **808** or **810.** Similarly, security policy management server B **818** may ensure that packet security gateways **812** and **814** protect each of their respective boundaries with network C **806** in a uniform manner. For example, security policy management server B **818** may be configured to communicate one or more dynamic security policies it maintains to packet security gateways **812** and **814** on a periodic basis, in response to being directed to by a network operator associated with network B **804,** in response to detected network conditions (*e.g*., an attack or high resource utilization), or in response to a request from packet security gateway **812** or **814.** By utilizing distinct security policy management servers (*e.g*., security policy management servers A **816** and B **818**), one or more operators associated with distinct networks (*e.g*., networks A **802** and B **804**) may maintain uniform dynamic security policies at each boundary of their respective networks, while simultaneously enabling different dynamic security policies to be maintained for each network. Similarly, by utilizing distinct security policy management servers (*e.g*., security policy management servers A **816** and B **818**), one or more operators associated with a single organization that desires to maintain distinct networks (*e.g*., networks A **802** and B **804**) may maintain uniform dynamic security policies at each boundary of their distinct networks, while simultaneously enabling different dynamic security policies to be maintained for each network.

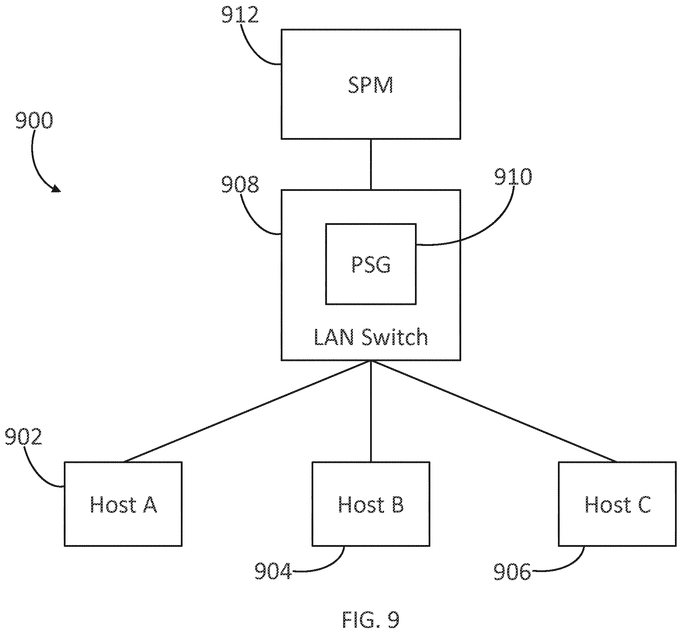

FIG. 9 illustrates an exemplary secure LAN environment protected in accordance with one or more aspects of the disclosure. Referring to FIG. 9, network environment **900** may be a LAN, including hosts A **902, B 904,** and C **906.** It may also include LAN switch **908.** LAN switch **908** may be configured to switch network traffic (*e.g*., packets) between one or more of hosts A **902, B 904,** and C **906.** For example, LAN switch **908** may include a switching matrix configured to switch packets received from one or more of hosts A **902, B 904,** and **C 906** to one or more of hosts A **902, B 904,** and C **906.** LAN switch **908** may be associated with packet security gateway **910,** and network environment **900** may include security policy management server **912.**

In some embodiments, packet security gateway **910** may be embedded within LAN switch **908.** Alternatively, packet security gateway **910** may be a device distinct from LAN switch **908,** and LAN switch **908** may be configured to route network traffic through packet security gateway **910** (*e.g.,* by modifying LAN switch **908**'s switching matrix). Packet security gateway **910** may be configured to receive one or more dynamic security policies from security policy management server **912.** The dynamic security policies received from security policy management server **912** may include one or more rules specifying criteria associated with one or more of hosts A **902, B 904,** and C **906,** and may further specify one or more packet transformation functions to be performed on packets matching the specified criteria. Packet security gateway **910** may identify packets matching one or more of the criteria specified by the rules and may perform the associated packet transformation functions on the identified packets. By utilizing packet security gateway **910** within network environment **900,** an operator of network environment **900** may be able to protect network environment **900** from network attacks, as well as implement one or more services (*e.g*., blocklist service, allowlist service, VoIP firewall service, phased restoration service, enqueueing service, multi-dimensional routing service, or monitoring service) within network environment **900.** Network environment **900** may include multiple LAN switches with embedded or associated packet security gateways, each of the packet security gateways configured to receive one or more dynamic security policies from security policy management server **912.**

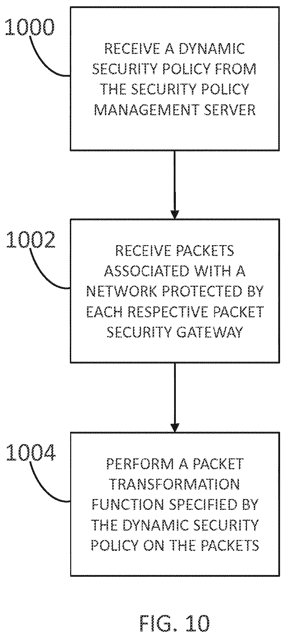

FIG. 10 illustrates an exemplary method for protecting a secured network in accordance with one or more embodiments. The steps may be performed at each of one or more packet security gateways associated with a security policy management server. For example, each of packet security gateways **112, 114, 116,** and **118** may be associated with security policy management server **120,** and the steps may be performed at each of packet security gateways **112, 114, 116,** and **118.** At step **1000,** a dynamic security policy is received from the security policy management server. For example, packet security gateway **112** may receive dynamic security policy **300** from security policy management server **120.** At step **1002,** packets associated with a network protected by each respective packet security gateway are received. For example, packet security gateway **112** may receive UDP packets from a device within network E **110** having an address that begins with 150 and that are destined for port 3030 of a device within network A **102.** At step **1004,** a packet transformation function specified by the dynamic security policy is performed on the packets. For example, rule **308** of dynamic security policy **300** may specify that packets using the UDP protocol, coming from a source address that begins with 150, having any source port, destined for any address, and destined for port 3030 should have an accept packet transformation function performed on them, packet filter **214** may identify the UDP packets received from the device within network E **110** as matching the criteria specified by rule **308,** packet transformation function 1 **216** may be configured to forward packets, and packet security gateway **112** may utilize packet transformation function **1 216** to perform the accept packet transformation function specified by rule **308** on the UDP packets received from the device within network E **110.**

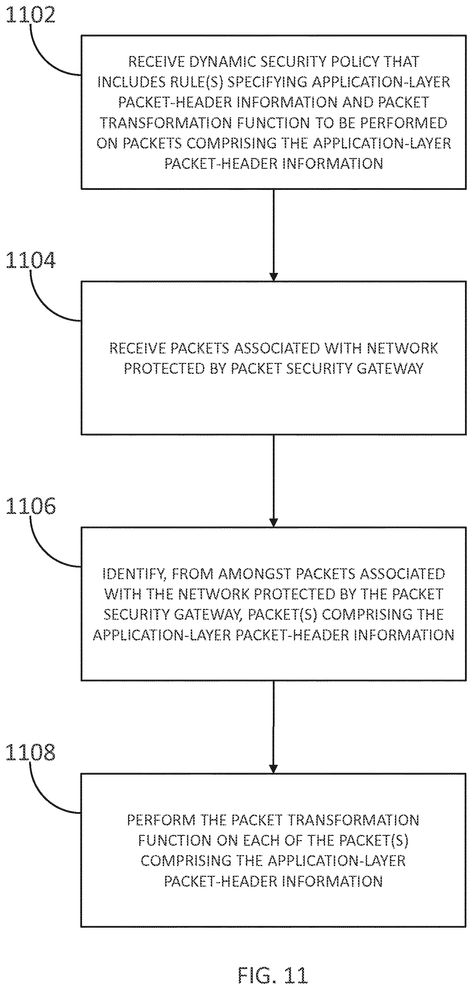

FIG. 11 illustrates an exemplary method for protecting a secured network that includes identifying packets based on application-layer packet-header information. Referring to FIG. 11, at step **1102,** a plurality of packet security gateways associated with a security policy management server may receive a dynamic security policy that includes at least one rule specifying application-layer packet-header information and a packet transformation function to be performed on packets comprising the application-layer packet-header information. For example, packet security gateways **112, 114, 116,** and **118** may be associated with security policy management server **120** and may receive a dynamic security policy that includes one or more rules specifying application-layer packet-header information (e.g., information that identifies one or more HTTP packets) and a packet transformation function to be performed on packets comprising the application-layer packet-header information (*e.g*., an accept or deny packet transformation function) from security policy management server **120.** At step **1104,** a packet security gateway, of the plurality of packet security gateways associated with the security policy management server, may receive packets associated with a network protected by the packet security gateway. For example, packet security gateway **112** may receive packets associated with network A **102** (*e.g*., from a computing device located in network A **102,** network B **104,** network C **106,** network D **108,** and/or network E **110**).

At step **1106,** the packet security gateway may identify, from amongst the packets associated with the network protected by the packet security gateway, and on a packet-by-packet basis, one or more packets comprising the application-layer packet-header information. For example, in some embodiments, the rule(s) specifying the application-layer packet-header information may identify one or more HTTP packets (*e.g*., one or more HTTP packets comprising an HTTP GET method call and/or an HTTP PUT method call), and packet security gateway **112** may identify, from amongst the packets associated with network A **112,** one or more packets comprising the application-layer packet-header information. In some embodiments, identifying the packets comprising the application-layer packet-header information may include the packet security gateway determining that the packets are among the HTTP packets identified by the rule(s) (*e.g*., the HTTP GET method call and/or the HTTP PUT method call may specify one or more URIs, and packet security gateway **112** may determine that the packet(s) originated from and/or are destined for a network address corresponding to the URI(s)). At step **1108,** the packet security gateway may perform, on a packet-by-packet basis, the packet transformation function on the identified packet(s). For example, if the packet transformation function is an accept packet transformation function, packet security gateway **112** may forward the packet(s) toward their respective destinations. Similarly, if the packet transformation function is a deny packet transformation function, packet security gateway **112** may drop the packet(s).

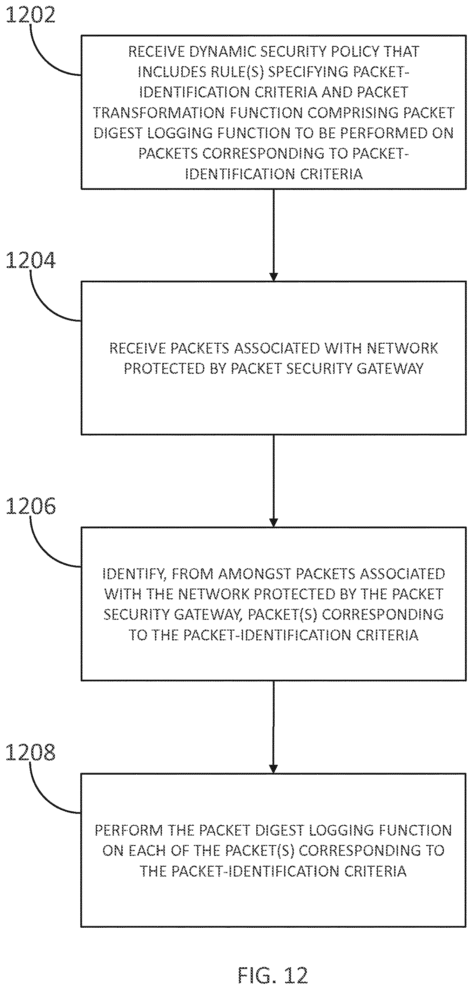

FIG. 12 illustrates an exemplary method for protecting a secured network that includes performing a packet digest logging function on packets that correspond to specified packet-identification criteria. Referring to FIG. 12, at step **1202,** each of a plurality of packet security gateways associated with a security policy management server may receive a dynamic security policy that includes at least one rule specifying packet-identification criteria and a packet transformation function comprising a packet digest logging function to be performed on packets corresponding to the packet-identification criteria from the security policy management server. For example, packet security gateways **112, 114, 116,** and **118** may be associated with security policy management server **120** and may receive a dynamic security policy that includes one or more rules specifying packet-identification criteria (*e.g*., application-layer packet-header information and/or a five-tuple specifying one or more transport-layer protocols, a range of source addresses, a range of source ports, a range of destination addresses, and a range of destination ports) and a packet transformation function comprising a packet digest logging function to be performed on packets corresponding to the packet-identification criteria from security policy management server **120.** At step **1204,** a packet security gateway, of the plurality of packet security gateways associated with the security policy management server, may receive packets associated with a network protected by the packet security gateway. For example, packet security gateway **112** may receive packets associated with network A **102** (*e.g*., from a computing device located in network A **102,** network B **104,** network C **106,** network D **108,** and/or network E **110**).

At step **1206,** the packet security gateway may identify from amongst the packets associated with the network protected by the packet security gateway, and on a packet-by-packet basis, one or more packets corresponding to the packet-identification criteria. For example, packet security gateway **112** may identify from amongst the packets associated with network A **102** one or more packets corresponding to the packet-identification criteria (*e.g*., by determining that the packet(s) comprise the specified application-layer packet-header information and/or correspond to at least one of the specified transport-layer protocols, have a source address within the specified range of source addresses, have a source port within the specified range of source ports, have a destination address within the specified range of destination addresses, and/or have a destination port within the specified range of destination ports). At step **1208,** the packet security gateway may perform, on a packet-by-packet basis, the packet digest logging function on each of the packets corresponding to the packet-identification criteria. For example, packet security gateway **112** may perform the packet digest logging function on each of the identified packets.

In some embodiments, performing the packet digest logging function may include identifying a subset of information specified by the packet digest logging function (*e.g*., a portion of data from the packet, a source address of the packet, a source port of the packet, a destination address of the packet, a destination port of the packet, a transport-protocol type of the packet, a uniform resource identifier (URI) from the packet, an arrival time of the packet, a size of the packet, a flow direction of the packet, an identifier of an interface of the packet security gateway that received the packet, and/or one or more media access control (MAC) addresses associated with the packet) for each of the identified packets, and generating a record comprising the subset of information for each of the identified packets. In some embodiments, packet security gateway **112** may be configured to temporarily store data comprising the subset of information for each of the identified packets, and to utilize the stored data to generate a message comprising the subset of information (or a portion thereof) for each of the identified packets. In such embodiments, packet security gateway **112** may communicate the message to a different computing device (*e.g*., security policy management server **120**). In some embodiments, the subset of information (or a portion thereof) may be reformatted (*e.g*., by packet security gateway **112** and/or security policy management server **120**) in accordance with a logging system standard (*e.g*., syslog).

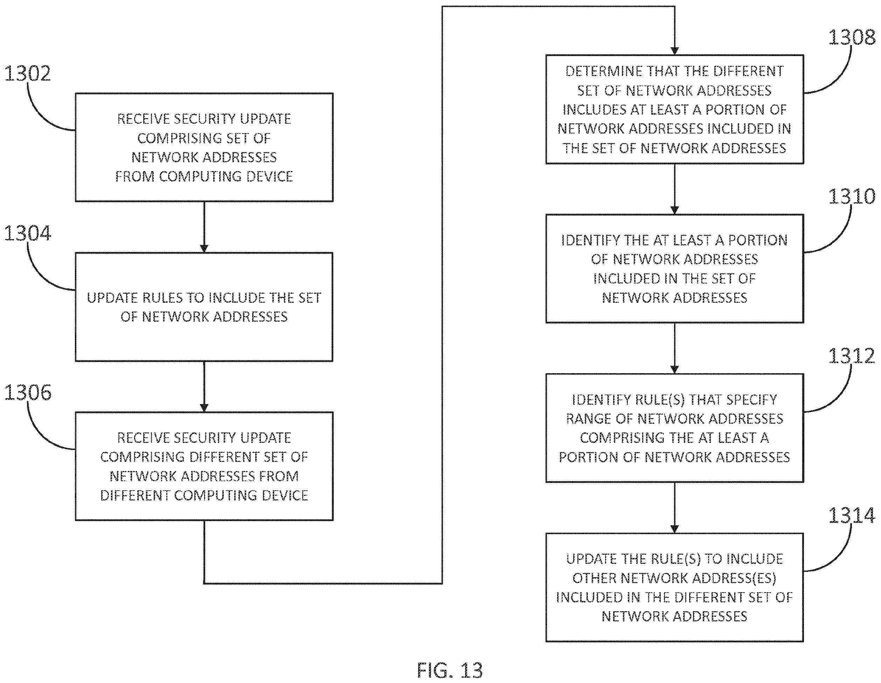

FIG. 13 illustrates an exemplary method for protecting a secured network that includes receiving security updates from multiple sources. Referring to FIG. 13, at step **1302,** a security policy management server may receive a security update comprising a set of network addresses from a computing device. For example, security policy management server **120** may receive a security update comprising a set of network addresses *(e.g*., {network address A, network address B, and network address C}) from malicious host tracker service **508** (or a computing device associated therewith). At step **1304,** the security policy management server may update one or more rules stored in its memory to include the set of network addresses. For example, security policy management server **120** may update one or more rules of dynamic security policy **300** (*e.g*., a rule specifying a deny packet transformation function) to include the set of network addresses (*e.g*., network addresses A, B, and C). At step **1306,** the security policy management server may receive a security update comprising a different set of network addresses from a different computing device. For example, security policy management server **120** may receive a security update comprising a different set of network addresses (*e.g*., {network address B, network address C, network address D, and network address E}) from a different computing device (*e.g*., a different computing device associated with malicious host tracker service **508** or a computing device associated with a malicious host tracker service different from malicious host tracker service **508**).

At step **1308,** the security policy management server may determine that the different set of network addresses includes at least a portion of network addresses included in the set of network addresses, and, at step **1310,** may identify the at least a portion of network addresses included in the set of network addresses. For example, security policy management server **120** may determine that the different set of network address (*e.g*., {network address B, network address C, network address D, and network address E}) includes at least a portion of network addresses (*e.g*., network addresses B and C) included in the set of network addresses (*e.g*., {network address A, network address B, and network address C}), and may identify the at least a portion of network addresses included in the set of network addresses (*e.g*., network addresses B and C). At step **1312,** the security policy management server may identify at least one of the rules stored in its memory that specifies a range of network addresses comprising the at least a portion of network addresses. For example, security policy management server **120** may identify the rule(s) of dynamic security policy **300** updated in step **1304** (*e.g*., the rule(s) updated to include network addresses A, B, and C). At step **1314,** the security policy management server may update the identified rule(s) to include one or more other network addresses included in the different set of network addresses. For example, security policy management server **120** may update the identified rules of dynamic security policy **300** to include one or more other network addresses included in the different set of network addresses (*e.g*., network addresses D and E).

In some embodiments, the security policy management server may identify two or more rules that each specify a range of network addresses comprising the at least a portion of network addresses. For example, security policy management server **120** may identify two rules of dynamic security policy **300** that each include the at least a portion of network addresses (*e.g*., a rule that includes network addresses A, B, C, and F, and a rule that includes network addresses A, B, C, and G). In such embodiments, the security policy management server may combine the two or more rules into a rule that specifies a range of network addresses that includes network addresses specified by each of the two or more rules and the one or more other network addresses included in the different set of network addresses. For example, security policy management server **120** may combine the two rules of dynamic security policy **300** that each include the at least a portion of network addresses (*e.g*., the rule that includes network addresses A, B, C, and F, and the rule that includes network addresses A, B, C, and G) into a rule that specifies a range of network addresses that includes network addresses specified by each of the two identified rules and the one or more other network addresses included in the different set of network addresses (*e.g*., a range that includes network addresses A, B, C, D, E, F, and G).

The functions and steps described herein may be embodied in computer-usable data or computer-executable instructions, such as in one or more program modules, executed by one or more computers or other devices to perform one or more functions described herein. Generally, program modules include routines, programs, objects, components, data structures, etc. that perform particular tasks or implement particular abstract data types when executed by one or more processors in a computer or other data processing device. The computer-executable instructions may be stored on a computer-readable medium such as a hard disk, optical disk, removable storage media, solid state memory, RAM, etc. As will be appreciated, the functionality of the program modules may be combined or distributed as desired in various embodiments. In addition, the functionality may be embodied in whole or in part in firmware or hardware equivalents, such as integrated circuits, application-specific integrated circuits (ASICs), field programmable gate arrays (FPGA), and the like. Particular data structures may be used to more effectively implement one or more aspects of the disclosure, and such data structures are contemplated to be within the scope of computer executable instructions and computer-usable data described herein.

Although not required, one of ordinary skill in the art will appreciate that various aspects described herein may be embodied as a method, an apparatus, or as one or more computer-readable media storing computer-executable instructions. Accordingly, those aspects may take the form of an entirely hardware embodiment, an entirely software embodiment, an entirely firmware embodiment, or an embodiment combining software, hardware, and firmware aspects in any combination.

As described herein, the various methods and acts may be operative across one or more computing servers and one or more networks. The functionality may be distributed in any manner, or may be located in a single computing device (*e.g*., a server, a client computer, etc.).

Aspects of the disclosure have been described in terms of illustrative embodiments thereof. Numerous other embodiments, modifications, and variations within the scope and spirit of the appended claims will occur to persons of ordinary skill in the art from a review of this disclosure. For example, one of ordinary skill in the art will appreciate that the steps illustrated in the illustrative figures may be performed in other than the recited order, and that one or more steps illustrated may be optional.

This application also includes the following clauses:
Clause 1: A method, comprising: receiving, by each of a plurality of packet security gateways associated with a security policy management server and from the security policy management server, a dynamic security policy that includes at least one rule specifying application-layer packet-header information and a packet transformation function to be performed on packets comprising the application-layer packet-header information; receiving, by a packet security gateway of the plurality of packet security gateways, packets associated with a network protected by the packet security gateway; identifying, by the packet security gateway, from amongst the packets associated with the network protected by the packet security gateway, and on a packet-by-packet basis, one or more packets comprising the application-layer packet-header information; and performing, by the packet security gateway and on a packet-by-packet basis, the packet transformation function on each of the one or more packets comprising the application-layer packet-header information.
Clause 2: The method of clause 1, wherein the at least one rule indicates that packets having the application-layer packet-header information should have an accept packet transformation function performed on them, and wherein performing the packet transformation function on each of the one or more packets comprising the application-layer packet-header information comprises the packet security gateway forwarding each of the one or more packets comprising the application-layer packet-header information toward its respective destination.
Clause 3: The method of clause 1, wherein the at least one rule indicates that packets having the application-layer packet-header information should have a deny packet transformation function performed on them, and wherein performing the packet transformation function on each of the one or more packets comprising the application-layer packet-header information comprises the packet security gateway dropping each of the one or more packets comprising the application-layer packet-header information.
Clause 4: The method of clause 1, wherein the application-layer packet-header information identifies one or more hypertext transfer protocol (HTTP) packets, and wherein identifying the one or more packets comprising the application-layer packet-header information comprises determining by the packet security gateway that the one or more packets comprising the application-layer packet-header information are amongst the one or more HTTP packets.
Clause 5: The method of clause 4, wherein the one or more HTTP packets comprise an HTTP GET method call, and wherein determining that the one or more packets comprising the application-layer packet-header information are amongst the one or more HTTP packets comprises determining that the one or more packets comprising the application-layer packet-header information are associated with the HTTP GET method call.
Clause 6: The method of clause 5, wherein the HTTP GET method call specifies a uniform resource identifier (URI), and wherein determining that the one or more packets comprising the application-layer packet-header information are associated with the HTTP GET method call comprises determining that the one or more packets comprising the application-layer packet-header information originated from or are destined for a network address corresponding to the URI.
Clause 7: The method of clause 4, wherein the one or more HTTP packets comprise an HTTP PUT method call, and wherein determining that the one or more packets comprising the application-layer packet-header information are amongst the one or more HTTP packets comprises determining that the one or more packets comprising the application-layer packet-header information are associated with the HTTP PUT method call.
Clause 8: The method of clause 7, wherein the HTTP PUT method call specifies a uniform resource identifier (URI), and wherein determining that the one or more packets comprising the application-layer packet-header information are associated with the HTTP PUT method call comprises determining that the one or more packets comprising the application-layer packet-header information originated from or are destined for a network address corresponding to the URI.
Clause 9: The method of clause 1, wherein the at least one rule comprises a five-tuple specifying one or more transport-layer protocols, a range of source addresses, a range of source ports, a range of destination addresses, and a range of destination ports, and wherein identifying the one or more packets comprising the application-layer packet-header information comprises determining by the packet security gateway that each of the one or more packets comprising the application-layer packet-header information corresponds to at least one of the one or more transport-layer protocols, has a source address within the range of source addresses, a source port within the range of source ports, a destination address within the range of destination addresses, and a destination port within the range of destination ports.
Clause 10: A method, comprising: receiving, by each of a plurality of packet security gateways associated with a security policy management server and from the security policy management server, a dynamic security policy that includes at least one rule specifying packet-identification criteria and a packet transformation function comprising a packet digest logging function to be performed on packets corresponding to the packet-identification criteria; receiving, by a packet security gateway of the plurality of packet security gateways, packets associated with a network protected by the packet security gateway; identifying, by the packet security gateway, from amongst the packets associated with the network protected by the packet security gateway, and on a packet-by-packet basis, one or more packets corresponding to the packet-identification criteria; and performing, by the packet security gateway and on a packet-by-packet basis, the packet digest logging function on each of the one or more packets corresponding to the packet-identification criteria.
Clause 11: The method of clause 10, wherein performing the packet digest logging function on each of the one or more packets corresponding to the packet-identification criteria comprises: identifying a subset of information specified by the packet digest logging function for each of the one or more packets corresponding to the packet-identification criteria; and generating, for each of the one or more packets corresponding to the packet-identification criteria, a record comprising the subset of information specified by the packet digest logging function.
Clause 12: The method of clause 11, wherein the subset of information comprises at least one of a portion of data from the packet, a source address of the packet, a source port of the packet, a destination address of the packet, a destination port of the packet, a transport-protocol type of the packet, a uniform resource identifier (URI) from the packet, an arrival time of the packet, a size of the packet, a flow direction of the packet, an identifier of an interface of the packet security gateway that received the packet, or one or more media access control (MAC) addresses associated with the packet.
Clause 13: The method of claim 11, comprising: temporarily storing data in a memory of the packet security gateway, the data comprising the subset of information specified by the packet digest logging function for each of the one or more packets corresponding to the packet-identification criteria; and utilizing, by the packet security gateway, the data to generate a message comprising the subset of information specified by the packet digest logging function for each of the one or more packets corresponding to the packet-identification criteria.
Clause 14: The method of claim 13 comprising communicating, by the packet security gateway and to the security policy management server, the message comprising the subset of information specified by the packet digest logging function for each of the one or more packets corresponding to the packet-identification criteria.
Clause 15: The method of clause 11, comprising reformatting, for each of the one or more packets corresponding to the packet-identification criteria, the subset of information specified by the packet digest logging function in accordance with a logging system standard.
Clause 16: The method of clause 15, wherein reformatting the subset of information specified by the packet digest logging function in accordance with the logging system standard comprises reformatting the subset of information specified by the packet digest logging function in accordance with a syslog logging system standard.
Clause 17: The method of clause 10, wherein the packet-identification criteria comprises a five-tuple specifying one or more transport-layer protocols, a range of source addresses, a range of source ports, a range of destination addresses, and a range of destination ports, and wherein identifying the one or more packets corresponding to the packet-identification criteria comprises determining by the packet security gateway that each of the one or more packets corresponding to the packet-identification criteria corresponds to at least one of the one or more transport-layer protocols, has a source address within the range of source addresses, a source port within the range of source ports, a destination address within the range of destination addresses, and a destination port within the range of destination ports.
Clause 18: The method of clause 10, wherein the packet-identification criteria comprises application-layer packet-header information, and wherein identifying the one or more packets corresponding to the packet-identification criteria comprises determining by the packet security gateway that each of the one or more packets corresponding to the packet-identification criteria comprises at least a portion of the application-layer packet-header information.
Clause 19: A method, comprising: receiving, by a security policy management server and from a computing device, a security update comprising a set of network addresses; updating, by the security policy management server, one or more rules stored in a memory of the security policy management server to include the set of network addresses; receiving, by the security policy management server and from a different computing device, a security update comprising a different set of network addresses; determining, by the security policy management server, that the different set of network addresses includes at least a portion of network addresses included in the set of network addresses; and responsive to determining that the different set of network addresses includes the at least a portion of network addresses included in the set of network addresses: identifying, by the security policy management server, the at least a portion of network addresses included in the set of network addresses; identifying, by the security policy management server, at least one of the one or more rules stored in the memory of the security policy management server that specifies a range of network addresses comprising the at least a portion of network addresses; and updating, by the security policy management server, the at least one of the one or more rules to include one or more other network addresses included in the different set of network addresses.
Clause 20: The method of clause 19, comprising: identifying at least two rules, of the one or more rules stored in the memory of the security policy management server, that each specify a range of network addresses comprising the at least a portion of network addresses; and combining the at least two of the one or more rules into a rule that specifies a range of network addresses that includes network addresses specified by each of the at least two rules and the one or more other network addresses included in the different set of network addresses.

## Claims

1. A method, comprising:
receiving, by a security policy management server (120) and from a computing device, a security update comprising a set of network addresses;
updating, by the security policy management server (120), one or more rules stored in a memory of the security policy management server to include the set of network addresses;
receiving, by the security policy management server (120) and from a different computing device, a security update comprising a different set of network addresses;
determining, by the security policy management server (120), that the different set of network addresses includes at least a portion of network addresses included in the set of network addresses; and
responsive to determining that the different set of network addresses includes the at least a portion of network addresses included in the set of network addresses:
identifying, by the security policy management server (120), the at least a portion of network addresses included in the set of network addresses;
identifying, by the security policy management server (120), at least one of the one or more rules stored in the memory of the security policy management server (120) that specifies a range of network addresses comprising the at least a portion of network addresses; and
updating, by the security policy management server (120), the at least one of the one or more rules to include one or more other network addresses included in the different set of network addresses.
communicating, by the security policy management server (120) and to at least one packet security gateway (112, 114, 116, 118), at least one of the one or more updated rules;
executing, by the packet security gateway(112, 114, 116, 118), a first rule, a second rule and a third rule in time-shifted phases, wherein the executing comprises:
executing, by the at least one packet security gateway (112, 114, 116, 118), the first rule, wherein the first rule specifies a set of network addresses;
executing, by the at least one packet security gateway (112, 114, 116, 118), the second rule at a time after the time at which the first rule is executed, wherein the second rule specifies a larger set of network addresses than the first rule; and
executing, by the at least one packet security gateway (112, 114, 116, 118), the third rule at a time after the time at which the second rule is executed, wherein the third rule specifies a larger set of network addresses than the second rule.

2. The method of claim 1, comprising:
identifying at least two rules, of the one or more rules stored in the memory (502) of the security policy management server (120), that each specify a range of network addresses comprising the at least a portion of network addresses; and
combining the at least two of the one or more rules into a rule that specifies a range of network addresses that includes network addresses specified by each of the at least two rules and the one or more other network addresses included in the different set of network addresses.

3. The method of claim 1 or 2, wherein the one or more rules stored in the memory (502) of the security policy management server (120) include a rule specifying a set of network addresses for which associated packets should be dropped and a rule specifying that all packets associated with network addresses outside the set of network addresses for which associated packets should be dropped should be forwarded.

4. The method of any one of the previous claims, wherein the one or more rules stored in the memory (502) of the security policy management server (120) include at least one rule specifying a set of network addresses for which associated packets should be forwarded and a rule specifying that all packets associated with network addresses outside the set of network addresses for which associated packets should be forwarded should be dropped.

5. The method of any one of the previous claims, wherein the one or more rules stored in the memory (502) of the security policy management server (120) includes at least one rule specifying a set of network addresses and an additional parameter.

6. The method of claim 5, wherein the additional parameter comprises at least one Session Initiation Protocol (SIP) Uniform Resource Identifier (URI).

7. The method of claim 5 or 6, further comprising:
routing, by the packet security gateway (112, 114, 116, 118), packets that fall within the specified set of network addresses and that match the additional parameter to a monitoring device network address different from a packet specified destination network address.

8. The method of any one of the previous claims,
wherein the network addresses specified by the first rule correspond to mission critical network devices,
wherein the network addresses specified by the second rule correspond to trusted network devices, and
wherein the network addresses specified by the third rule correspond to all network devices that would be allowed under ordinary circumstances.

9. One or more non-transitory computer-readable media having instructions stored thereon, that when executed by one or more computers, cause the one or more computers to perfom the method of any one of claims 1 to 8.

10. The one or more non-transitory computer-readable media of claim 9, having instructions stored thereon, that when executed by the one or more computers, further cause the one or more computers to:
remove duplicate network addresses from the at least one of one or more rules.

11. A system configured to perform the method of any one of claims 1 to 8 comprising:
the packet security gateway (112, 114, 116, 118); and
the security policy management server (120).

12. The system of claim 11, further configured to perform:
removing duplicate network addresses from the at least one of the one or more rules.
